# EUROPÄISCHE PATENTSCHRIFT

(11) **EP 3 516 236 B1**
(45) Veröffentlichungstag und Bekanntmachung des Hinweises auf die Patenterteilung: **19.08.2020**
(21) Anmeldenummer: 17780637.9
(22) Anmeldetag: 19.09.2017
(51) Int. Cl.: F04C 29/02, F04C 29/04, F04C 23/02, B60T 17/02

(54) **SYSTEM FÜR EIN NUTZFAHRZEUG UMFASSEND EINEN KOMPRESSOR SOWIE EINEN ELEKTROMOTOR**
SYSTEM FOR A UTILITY VEHICLE COMPRISING A COMPRESSOR AND AN ELECTRIC MOTOR
SYSTÈME POUR VÉHICULE UTILITAIRE COMPRENANT UN COMPRESSEUR AINSI QU'UN MOTEUR ÉLECTRIQUE

(30) Priorität: 21.09.2016 DE 102016011504
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: KOVACSIK, Peter, 80809 München (DE); NÉMETH, Huba, 80809 München (DE); TIHANYI, Viktor, 80809 München (DE)
(86) Internationale Anmeldenummer: PCT/EP2017/073552
(87) Internationale Veröffentlichungsnummer: WO 2018/054867

(56) Entgegenhaltungen:
- EP-A1- 1 705 379
- WO-A1-01/34979
- WO-A2-2010/142631
- DE-A1- 19 749 572
- DE-A1-102011 001 394
- DE-A1-102013 208 538
- US-A- 4 780 061
- US-A- 5 246 349
- US-A1- 2002 044 876

## Beschreibung

Die vorliegende Erfindung betrifft ein System für ein Nutzfahrzeug umfassend einen Schraubenkompressor sowie einen Elektromotor.

Aus dem Stand der Technik sind bereits Schraubenkompressoren für Nutzfahrzeuge bekannt. Derartige Schraubenkompressoren werden verwendet, um die notwendige Druckluft für beispielsweise das Bremssystem des Nutzfahrzeugs bereitzustellen.

In diesem Zusammenhang sind insbesondere Öl befüllte Kompressoren, insbesondere auch Schraubenkompressoren bekannt, bei denen sich als Aufgabe stellt, die Öltemperatur zu regulieren. Dies wird in der Regel dadurch bewerkstelligt, dass ein externer Ölkühler vorhanden ist, der mit dem Öl befüllten Kompressor und dem Ölkreislauf über ein Thermostatventil verbunden ist. Der Ölkühler ist dabei ein Wärmetauscher, der zwei voneinander getrennte Kreisläufe aufweist, wobei der erste Kreislauf für die heiße Flüssigkeit, also das Kompressoröl, vorgesehen ist und der zweite für die Kühlflüssigkeit. Als Kühlflüssigkeit können beispielsweise Luft, Wassergemische mit einem Frostschutzmittel oder einem anderen Öl verwendet werden.

Dieser Ölkühler muss sodann mit dem Kompressorölkreislauf über Rohre oder Schläuche verbunden werden und der Ölkreislauf muss gegen Leckagen gesichert werden.

Dieses externe Volumen muss des Weiteren mit Öl befüllt werden, so dass auch die Gesamtmenge an Öl vergrößert wird. Dadurch wird die Systemträgheit vergrößert. Darüber hinaus muss der Ölkühler mechanisch untergebracht und befestigt werden, entweder durch umliegend befindliche Halterungen oder durch eine gesonderte Halterung, was zusätzliche Befestigungsmittel, aber auch Bauraum benötigt.

Aus der US 4,780,061 ist bereits ein Schraubenkompressor mit einer integrierten Ölkühlung bekannt.

Des Weiteren offenbart die DE 37 17 493 A1 eine in einem kompakten Gehäuse angeordnete Schraubenverdichter-Anlage, die einen Ölkühler auf dem Elektromotor des Schraubenkompressors aufweist.

Aus der DE 10 2010 015 151 A1 ist ein Verdichterflansch für einen Schraubenverdichter bekannt.

Weiter ist aus der US 2014/0190674 A1 ein Verbindungsflansch für einen Wärmetauscher eines Kraftfahrzeuges bekannt, der Kühlkanäle aufweist.

Aus der DE 10 2013 011 061 B3 ist weiter ein Wärmetauscher mit einer Flanschverbindung bekannt, wobei die Flanschverbindung einen Anschlussflansch aufweist, der ein Druckgussteil ist und gießtechnisch hergestellte Durchgangslöcher zur Aufnahme von Schraubbolzen aufweist.

Aus der WO 2009/033556 A1 ist ein trockenlaufender Kompressor bekannt, bei dem ein Elektromotor integriert ist.

Eine vergleichbare Anordnung ist auch aus der CN 102748292 A bekannt.

Aus der DE 10 2011 001 394 A1 ist ein elektrisch angetriebener Kältemittelverdichter bekannt, der einen Aussenläuferelektromotor mit Rotor und Stator, einen Verdichter und eine Antriebswelle für Elektromotor und Verdichter aufweist, wobei die Antriebswelle in einem Hauptgehäuse des Kältemittelverdichters mittels Wellenlagerung gelagert ist und das Hauptgehäuse dazu eine rohrförmige Ausstülpung in axialer Richtung aufweist, in deren Inneren die Antriebswelle konzentrisch und zweifach angeordnet ist. Ein Inverter ist im Gehäuse selbst gelagert.

Aus der EP 1705379 A1 ist ein Schraubenkompressor bekannt, bei dem die Leistungselektronik ebenfalls im Gehäuse angeordnet ist.

Die WO 2010/142631 A2 betrifft eine Vakuumpumpe, die von einem Elektromotor angetrieben wird. Zur Veränderung der Drehzahl des Elektromotors ist ein Frequenzumrichter vorgesehen, wobei der Frequenzumrichter unmittelbar mit dem Pumpengehäuse verbundenen Frequenzumrichtergehäuse angeordnet ist. Zur Kühlung des Frequenzumrichters ist innerhalb des Frequenzumrichtergehäuses ein Luftkühler sowie ein Flüssigkeitskühler angeordnet.

Es ist die Aufgabe der vorliegenden Erfindung, ein System für ein Nutzfahrzeug umfassend einen Kompressor, einen Elektromotor und eine Antriebselektronik der eingangs genannten Art in vorteilhafter Weise weiterzubilden, insbesondere dahingehend, dass der Platzbedarf eines derartigen Systems weiter verringert werden kann.

Diese Aufgabe wird erfindungsgemäß gelöst durch ein System für ein Nutzfahrzeug mit den Merkmalen des Anspruchs 1. Danach ist vorgesehen, dass ein System für ein Nutzfahrzeug einen Kompressor, einen Elektromotor und eine Antriebselektronik umfasst, wobei Elektromotor und Antriebselektronik ein gemeinsames Gehäuse aufweisen und wobei der Elektromotor einen Rotor aufweist, der die Antriebswelle des Kompressors zumindest teilweise umgreift.

Die Erfindung basiert auf dem Grundgedanken, für Elektromotor, Kompressor und Antriebselektronik eine gemeinsame bauliche Einheit herzustellen, so dass insgesamt eine kompakte bauliche Einheit für das System entstehen kann. Hierdurch wird es möglich, die axiale Länge insgesamt der gesamten Einheit zu verringern. Insbesondere dadurch, dass die Antriebselektronik mit in das Gehäuse des Elektromotors integriert wird, wird es möglich, kompakter bauen zu können.

Der Kompressor kann ein Schraubenkompressor sein. Durch die Ausgestaltung als Schraubenkompressor wird ein effizienter und wirtschaftlicher Betrieb des Kompressors im Rahmen der Drucklufterzeugung für ein Nutzfahrzeug, insbesondere im Zusammenhang mit Hybrid-Nutzfahrzeugen, möglich. Bei derartigen Fahrzeugen verhält es sich insbesondere so, dass nicht kontinuierlich im Fahrbetrieb das Antriebsaggregat des Nutzfahrzeuges durchläuft und deshalb auch nicht jederzeit ein Antrieb des Kompressors durch das Antriebsaggregat möglich ist. Eine Abkopplung ist daher notwendig, weshalb der Einsatz von Schraubenkompressoren von Vorteil ist.

Die Antriebselektronik kann auf der dem Kompressor abgewandten Seite des Elektromotors angeordnet sein. Hierdurch wird es möglich, die Komponenten des Systems im Wesentlichen entlang einer Achse anzuordnen und hierdurch den Bauraum auch optimal ausnutzen zu können.

Der Elektromotor kann eine Antriebswelle aufweisen, mit der der Kompressor angetrieben wird und es kann vorgesehen sein, dass die Antriebselektronik radial zur Antriebswelle angeordnet ist. Durch eine derartige Anordnung wird es möglich, auch in radialer Richtung bezogen auf die Antriebswelle zur Verfügung stehenden Bauraum für Komponenten des Systems zu nutzen.

Grundsätzlich ist es aber auch möglich, dass die Antriebselektronik axial zur Antriebswelle angeordnet ist. Je nach Ausgestaltung steht auch hier entsprechender Bauraum zur Verfügung, der ausgenutzt werden kann.

Der Elektromotor kann einen Stator mit voneinander beabstandeten Windungen aufweisen, wobei die Antriebselektronik teilweise in Zwischenräume zwischen die Windungen hineinragt. Hierdurch wird es möglich, auch diese Zwischenräume als Bauraum für die Antriebselektronik zu nutzen. Eine kompakte Bauweise der gesamten Einheit wird hierdurch weiter verbessert und ermöglicht.

Weitere Einzelheiten und Vorteile der Erfindung sollen nun anhand eines in den Zeichnungen dargestellten Ausführungsbeispiels näher erläutert werden.

### Es zeigen

- Fig. 1: eine schematische Schnittdarstellung eines erfindungsgemäßen Ausführungsbeispiels für ein erfindungsgemäßes System für ein Nutzfahrzeug umfassend einen Schraubenkompressor sowie einen Elektromotor;
- Fig. 2: eine perspektivische Exposionszeichnung auf die Komponenten eines erfindungsgemäßen Ausführungsbeispiels des Systems; und
- Fig. 3: eine perspektivische Detailschnittzeichnung durch den Elektromotor und die Antriebselektronik des Elektromotors des Systems gemäß Fig. 2.

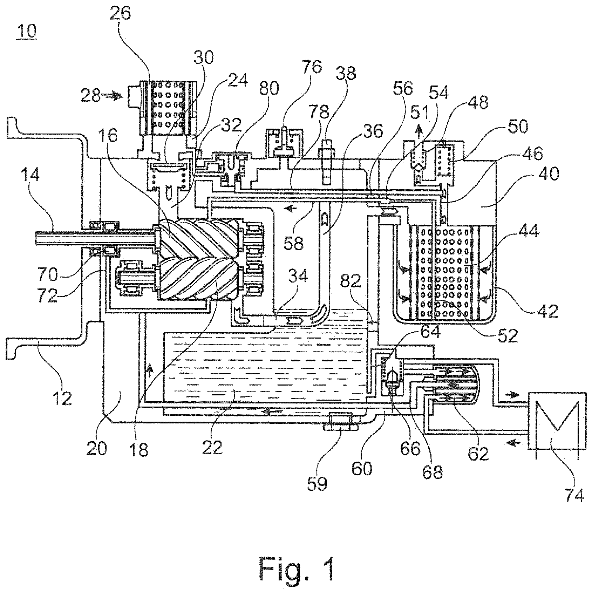

**Fig. 1** zeigt in einer schematischen Schnittdarstellung einen Schraubenkompressor 10 im Sinne eines Ausführungsbeispiels für die vorliegende Erfindung.

Der Schraubenkompressor 10 weist einen Befestigungsflansch 12 zur mechanischen Befestigung des Schraubenkompressors 10 an einem hier nicht näher gezeigten Elektromotor auf.

Gezeigt ist jedoch die Eingangswelle 14, über die das Drehmoment vom Elektromotor auf eine der beiden Schrauben 16 und 18, nämlich die Schraube 16 übertragen wird.

Die Schraube 18 kämmt mit der Schraube 16 und wird über diese angetrieben.

Der Schraubenkompressor 10 weist ein Gehäuse 20 auf, in dem die wesentlichen Komponenten des Schraubenkompressors 10 untergebracht sind.

Das Gehäuse 20 ist mit Öl 22 befüllt.

Lufteingangsseitig ist am Gehäuse 20 des Schraubenkompressors 10 ein Einlassstutzen 24 vorgesehen. Der Einlassstutzen 24 ist dabei derart ausgebildet, dass an ihm ein Luftfilter 26 angeordnet ist. Außerdem ist radial am Lufteinlassstutzen 24 ein Lufteinlass 28 vorgesehen.

Im Bereich zwischen Einlassstutzen 24 und der Stelle, an dem der Einlassstutzen 24 am Gehäuse 20 ansetzt, ist ein federbelasteter Ventileinsatz 30 vorgesehen, hier als Axialdichtung ausgeführt.

Dieser Ventileinsatz 30 dient als Rückschlagventil.

Stromabwärts des Ventileinsatzes 30 ist ein Luftzuführkanal 32 vorgesehen, der die Luft den beiden Schrauben 16, 18 zuführt.

Ausgangsseitig der beiden Schrauben 16, 18 ist ein Luftauslassrohr 34 mit einer Steigleitung 36 vorgesehen.

Im Bereich des Endes der Steigleitung 36 ist ein Temperaturfühler 38 vorgesehen, mittels dessen die Öltemperatur überwachbar ist.

Weiter vorgesehen ist im Luftauslassbereich ein Halter 40 für ein Luftentölelement 42.

Der Halter 40 für das Luftentölelement weist im montierten Zustand im dem Boden zugewandten Bereich (wie auch in Fig. 1 gezeigt) das Luftentölelement 42 auf.

Weiter vorgesehen ist im Inneren der Luftentölelement 42 ein entsprechendes Filtersieb bzw. bekannte Filter- und Ölabscheidevorrichtungen 44, die nicht näher im Einzelnen spezifiziert werden.

Im zentralen oberen Bereich, bezogen auf den montierten und betriebsfertigen Zustand (also wie in Fig. 1 gezeigt), weist der Halter für das Luftentölelement 40 eine Luftausgangsöffnung 46 auf, die zu einem Rückschlagventil 48 und einem Mindestdruckventil 50 führen. Das Rückschlagventil 48 und das Mindestdruckventil 50 können auch in einem gemeinsamen, kombinierten Ventil ausgebildet sein.

Nachfolgend des Rückschlagventils 48 ist der Luftauslass 51 vorgesehen.

Der Luftauslass 51 ist mit entsprechend bekannten Druckluftverbrauchern in der Regel verbunden.

Um das im Luftentölelement 42 befindliche und abgeschiedene Öl 22 wieder in das Gehäuse 20 zurückzuführen, ist eine Steigleitung 52 vorgesehen, die ausgangs des Halters 40 für das Luftentölelement 42 beim Übertritt in das Gehäuse 20 ein Filter- und Rückschlagventil 54 aufweist.

Stromabwärts des Filter- und Rückschlagventils 54 ist in einer Gehäusebohrung eine Düse 56 vorgesehen. Die Ölrückführleitung 58 führt zurück in etwa den mittleren Bereich der Schraube 16 oder der Schraube 18, um dieser wieder Öl 22 zuzuführen.

Im im montierten Zustand befindlichen Bodenbereich des Gehäuses 20 ist eine Ölablassschraube 59 vorgesehen. Über die Ölablassschraube 59 kann eine entsprechende Ölablauföffnung geöffnet werden, über die das Öl 22 abgelassen werden kann.

Im unteren Bereich des Gehäuses 20 ist auch der Ansatz 60 vorhanden, an dem der Ölfilter 62 befestigt wird. Über einen Ölfiltereinlasskanal 64, der im Gehäuse 20 angeordnet ist, wird das Öl 22 zunächst zu einem Thermostatventil 66 geleitet.

Anstelle des Thermostatventils 66 kann eine Steuerungs- und/oder Regelungseinrichtung vorgesehen sein, mittels derer die Öltemperatur des im Gehäuse 20 befindlichen Öls 22 überwachbar und auf einen Sollwert einstellbar ist.

Stromabwärts des Thermostatventils 66 ist sodann der Öleinlass des Ölfilters 62, der über eine zentrale Rückführleitung 68 das Öl 22 wieder zurück zur Schraube 18 oder zur Schraube 16, aber auch zum ölgeschmierten Lager 70 der Welle 14 führt. Im Bereich des Lagers 70 ist auch eine Düse 72 vorgesehen, die im Gehäuse 20 im Zusammenhang mit der Rückführleitung 68 vorgesehen ist.

Der Kühler 74 ist am Ansatz 60 angeschlossen.

Im oberen Bereich des Gehäuses 20 (bezogen auf den montierten Zustand) befindet sich ein Sicherheitsventil 76, über das ein zu großer Druck im Gehäuse 20 abgebaut werden kann.

Vor dem Mindestdruckventil 50 befindet sich eine Bypassleitung 78, die zu einem Entlastungsventil 80 führt. Über dieses Entlastungsventil 80 das mittels einer Verbindung mit der Luftzuführung 32 angesteuert wird kann Luft in den Bereich des Lufteinlasses 28 zurückgeführt werden. In diesem Bereich kann ein nicht näher gezeigtes Entlüftungsventil und auch eine Düse (Durchmesserveringerung der zuführenden Leitung) vorgesehen sein.

Darüber hinaus kann ungefähr auf Höhe der Leitung 34 in der Außenwand des Gehäuses 20 ein Öllevelsensor 82 vorgesehen sein. Dieser Öllevelsensor 82 kann beispielsweise ein optischer Sensor sein und derart beschaffen und eingerichtet, dass anhand des Sensorsignals erkannt werden kann, ob der Ölstand im Betrieb oberhalb des Öllevelsensors 82 ist oder ob der Öllevelsensor 82 frei liegt und hierdurch der Ölstand entsprechend gefallen ist.

Im Zusammenhang mit dieser Überwachung kann auch eine Alarmeinheit vorgesehen sein, die eine entsprechende Fehlermeldung oder Warnmeldung an den Nutzer des Systems ausgibt bzw. weiterleitet.

Die Funktion des in Fig. 1 gezeigten Schraubenkompressors 10 ist dabei wie folgt:
Luft wird über den Lufteinlass 28 zugeführt und gelangt über das Rückschlagventil 30 zu den Schrauben 16, 18, wo die Luft komprimiert wird. Das komprimierte Luft-Öl-Gemisch, das mit einem Faktor zwischen 5- bis 16facher Komprimierung nach den Schrauben 16 und 18 durch die Auslassleitung 34 über das Steigrohr 36 aufsteigt, wird direkt auf den Temperaturfühler 38 geblasen.

Die Luft, die noch teilweise Ölpartikel trägt, wird sodann über den Halter 40 in das Luftentölelement 42 geführt und gelangt, sofern der entsprechende Mindestdruck erreicht wird, in die Luftauslassleitung 51.

Das im Gehäuse 20 befindliche Öl 22 wird über den Ölfilter 62 und ggf. über den Wärmetauscher 74 auf Betriebstemperatur gehalten.

Sofern keine Kühlung notwendig ist, wird der Wärmetauscher 74 nicht verwendet und ist auch nicht zugeschaltet.

Die entsprechende Zuschaltung erfolgt über das Thermostatventil 68. Nach der Aufreinigung im Ölfilter 64 wird über die Leitung 68 Öl der Schraube 18 oder der Schraube 16, aber auch dem Lager 72 zugeführt. Die Schraube 16 oder die Schraube 18 wird über die Rückführleitung 52, 58 mit Öl 22 versorgt, hier erfolgt die Aufreinigung des Öls 22 im Luftentölelement 42.

Über den nicht näher gezeigten Elektromotor, der sein Drehmoment über die Welle 14 auf die Schraube 16 überträgt, die wiederum mit der Welle 18 kämmt, werden die Schrauben 16 und 18 des Schraubenkompressors 10 angetrieben.

Über das nicht näher gezeigte Entlastungsventil 80 wird sichergestellt, dass im Bereich der Zuleitung 32 nicht der hohe Druck, der im Betriebszustand beispielsweise ausgangsseitig der Schrauben 16, 18 herrscht, eingesperrt werden kann, sondern dass insbesondere beim Anlaufen des Kompressors im Bereich der Zuleitung 32 stets ein niedriger Eingangsdruck, insbesondere Atmosphärendruck, besteht. Andernfalls würde mit einem Anlaufen des Kompressors zunächst ein sehr hoher Druck ausgangsseitig der Schrauben 16 und 18 entstehen, der den Antriebsmotor überlasten würde.

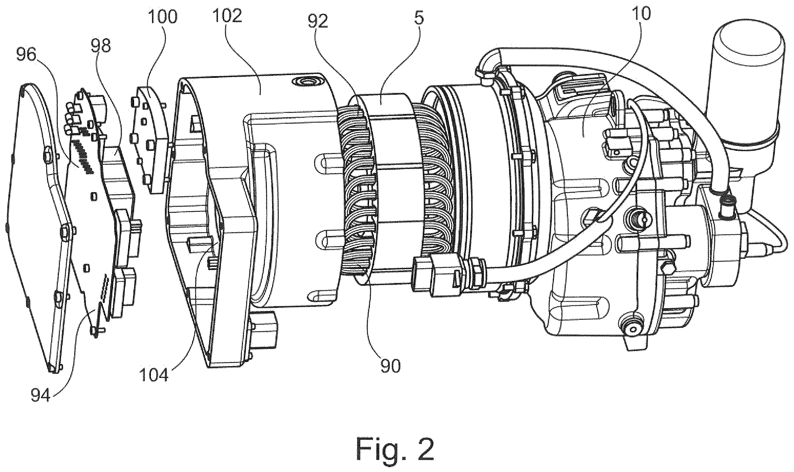

Fig. 2 zeigt in perspektivischer Exposionsdarstellung das Systems 1 für ein Nutzfahrzeug.

Das System 1 weist einen Elektromotor 5 und einen, wie in Fig. 1 gezeigten Schraubenkompressor 10 auf.

Weitere Komponenten des Systems 1 sind der Stator 90 des Elektromotors 5, der mehrere voneinander beabstandete Windungen 92 aufweist. Der Rotor des Elektromotors 5 ist nicht näher dargestellt.

Darüber hinaus ist eine Antriebselektronik 94 vorgesehen.

Dabei weist die Antriebselektronik 94 eine Hauptplatine 96 und kapazitive und induktive Komponenten 98 und ein Kühlelement 100 auf.

Wie bereits aus Fig. 2 ersichtlich ist, werden durch ein gemeinsames Gehäusebauteil bzw. Gehäuse 102 auf der einen Seite der Rotor des Elektromotors 5 und auf der anderen Seite die Antriebselektronik 94 aufgenommen.

Das Gehäusebauteil 102 weist eine Zwischenwand 104 auf, die die Antriebselektronik 94 vom Rotor trennt.

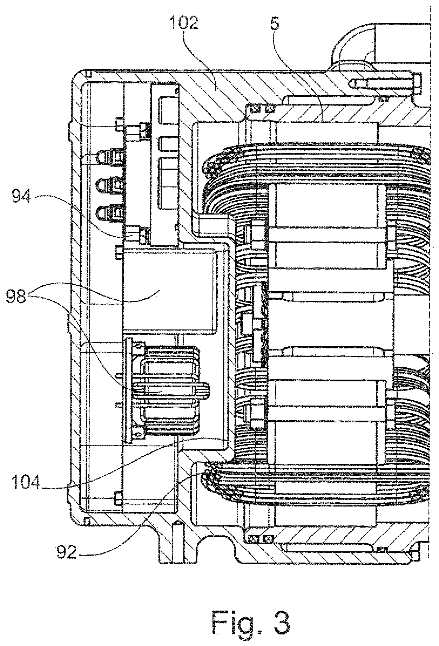

Dies ist insbesondere gut in der Detaildarstellung in **Fig. 3** ersichtlich.

Diese Zwischenwand 104 weist eine in Richtung der Windungen 92 des Rotors gerichtete Ausnehmung auf, in die die kapazitiven und induktiven Elemente 98, aber auch das Kühlelement 100 der Antriebselektronik 94 hineinragen.

Hierdurch kann die axiale Baulänge des Gesamtsystems 1 verringert werden.

### BEZUGSZEICHENLISTE

- 1: System
- 5: Elektromotor
- 10: Schraubenkompressor
- 12: Befestigungsflansch
- 14: Eingangswelle
- 16: Schrauben
- 18: Schrauben
- 20: Gehäuse
- 22: Öl
- 24: Einlassstutzen
- 26: Luftfilter
- 28: Lufteinlass
- 30: Ventileinsatz
- 32: Luftzuführkanal
- 34: Luftauslassrohr
- 36: Steigleitung
- 38: Temperaturfühler
- 40: Luftölabscheider
- 42: Ölfalle
- 44: Filtersieb bzw. bekannte Filter- bzw. Ölabscheidevorrichtungen
- 46: Luftausgangsöffnung
- 48: Kontrollventil
- 50: Mindestdruckventil
- 51: Luftauslass
- 52: Steigleitung
- 54: Filter- und Kontrollventil
- 56: Choke
- 58: Ölrückführleitung
- 59: Ölablassschraube
- 60: Ansatz
- 62: Ölfilter
- 64: Ölfiltereinlasskanal
- 66: Thermostatventil
- 68: Rückführleitung
- 70: Lager
- 72: Choke
- 76: Sicherheitsventil
- 78: Bypassleitung
- 80: Entlastungsventil
- 82: Öllevelsensor
- 90: Stator
- 92: Windungen
- 94: Antriebselektronik
- 96: Hauptplatine
- 98: kapazitive und induktive Komponente
- 100: Kühlelement
- 102: Gehäusebauteil
- 104: Zwischenwand

## Patentansprüche

1. System (1) für ein Nutzfahrzeug umfassend einen Kompressor (10), einen Elektromotor (5) und eine Antriebselektronik (94), wobei der Elektromotor (5) den Kompressor (10) antreibt, wobei Elektromotor (5) und Antriebselektronik (94) ein gemeinsames Gehäuse (102) aufweisen und wobei der Elektromotor (5) einen Rotor aufweist, der die Antriebswelle des Kompressors (10) zumindest teilweise wobei der Elektromotor (5) einen Stator (90) mit voneinander beabstandeten Windungen (92) aufweist, wobei die Antriebselektronik (94) teilweise in Zwischenräume zwischen Windungen (92) hineinragt, wobei die Antriebselektronik (94) eine Hauptplatine (96) und kapazitive und induktive Komponenten (98) und ein Kühlelement (100) aufweist und
wobei das Gehäuse (102) eine Zwischenwand (104) aufweist, die die Antriebselektronik (94) vom Rotor trennt und wobei die Zwischenwand (104) in eine Richtung der Windungen (92) des Rotors gerichtete Ausnehmung aufweist, in die die kapazitive und induktiven Komponenten (98), aber auch das Kühlelement der Antriebselektronik (94) hineinragen..

2. System (1) nach Anspruch 1,
**dadurch gekennzeichnet, dass**
der Kompressor (10) ein Schraubenkompressor (10) ist.

3. System (1) nach Anspruch 1 oder Anspruch 2,
**dadurch gekennzeichnet, dass**
die Antriebselektronik (94) auf der dem Kompressor (10) abgewandten Seite des Elektromotors (5) angeordnet ist.

4. System (1) nach einem der vorhergehenden Ansprüche,
**dadurch gekennzeichnet, dass**
der Elektromotor (5) eine Antriebswelle aufweist, mit der der Kompressor (10) angetrieben wird, und dass die Antriebselektronik (94) radial zur Antriebswelle angeordnet ist.

5. System (1) nach Anspruch 3,
**dadurch gekennzeichnet, dass**
der Elektromotor (5) eine Antriebswelle aufweist, mit der der Kompressor (10) angetrieben wird, und dass die Antriebselektronik (94) axial zur Antriebswelle angeordnet ist.

## Claims

1. A system (1) for a utility vehicle comprising a compressor (10), an electric motor (5) and an electronic drive unit (94), the electric motor (5) driving the compressor (10), the electric motor (5) and the electronic drive unit (94) having a common housing (102) and the electric motor (5) having a rotor that at least partially encompasses the drive shaft of the compressor (10), the electric motor (5) having a stator (9) with windings (92) that are spaced apart from one another, the electronic drive unit (94) partially projecting into spaces between the windings (92), the electronic drive unit (94) having a main printed circuit board (96) and capacitive and inductive components (89) and a cooling element (100), and
the housing (102) having a partition (104) that separates the electronic drive unit (94) from the rotor and the partition (104) having a recess facing in the direction of the windings (92) of the rotor into which the capacitive and inductive components (98) but also the cooling element of the electronic drive unit (94) project.

2. A system (1) according to claim 1,
**characterised in that**
the compressor (10) is a screw compressor (10).

3. A system (1) according to claim 1 or claim 2,
**characterised in that**
the electronic drive unit (94) is arranged on the side of the electric motor (5) facing away from the compressor (10).

4. A system (1) according to any one of the preceding claims,
**characterised in that**
the electric motor (5) has a drive shaft by means of which the compressor (10) is driven and that the electronic drive unit (94) is arranged radially in relation to the drive shaft.

5. A system (1) according to claim 3,
**characterised in that**
the electric motor (5) has a drive shaft by means of which the compressor (10) is driven and that the electronic drive unit (94) is arranged axially in relation to the drive shaft.

## Revendications

1. Système (1) pour un véhicule utilitaire, comprenant un compresseur (10), un moteur (5) électrique et une électronique (94) de commande, le moteur (5) électrique entraînant le compresseur (10), dans lequel le moteur (5) électrique et l'électronique (94) de commande ont un boîtier (102) commun et dans lequel le moteur (5) électrique a un rotor, qui entoure, au moins en partie, l'arbre d'entraînement du compresseur (10), dans lequel le moteur (5) électrique a un stator (90) ayant des enroulements (92) à distance les uns des autres, dans lequel l'électronique (94) de commande pénètre en partie dans des espaces intermédiaires entre des enroulements (92), dans lequel l'électronique (94) de commande a une platine (96) principale et des composants (98) capacitifs et inductifs et un élément (100) de refroidissement et
dans lequel le boîtier (102) a une paroi (104) intermédiaire, qui sépare l'électronique (94) de commande du rotor et dans lequel la paroi (104) intermédiaire a un évidement, qui est dirigé dans la direction des enroulements (92) du rotor et dans lequel pénètre les composants (98) capacitifs et inductifs, mais aussi l'élément de refroidissement de l'électronique (94) de commande.

2. Système (1) suivant la revendication 1,
**caractérisé en ce que**
le compresseur (10) est un compresseur (10) à vis.

3. Système (1) suivant la revendication 1 ou la revendication 2,
**caractérisé en ce que**
l'électronique (94) de commande est disposée du côté du moteur (5) électrique loin du compresseur (10).

4. Système (1) suivant l'une des revendications précédentes, **caractérisé en ce que**
le moteur (5) électrique a un arbre d'entraînement, par lequel le compresseur (10) est entraîné, et **en ce que** l'électronique (94) de commande est disposée radialement par rapport à l'arbre d'entraînement.

5. Système (1) suivant la revendication 3,
**caractérisé en ce que**
le moteur (5) électrique a un arbre d'entraînement, par lequel le compresseur (10) est entraîné, et **en ce que** l'électronique (94) d'entraînement est disposée axialement par rapport à l'arbre d'entraînement.
